# EUROPÄISCHE PATENTSCHRIFT

(11) **EP 2 440 644 B1**
(45) Veröffentlichungstag und Bekanntmachung des Hinweises auf die Patenterteilung: **19.11.2014**
(21) Anmeldenummer: 10722094.9
(22) Anmeldetag: 28.05.2010
(51) Int. Cl.: C11D 3/37, C11D 3/39, C08K 5/00, D21C 9/10, D21C 9/16

(54) **SCHONENDES BLEICHMITTEL**
GENTLE BLEACHING AGENT
AGENT DE BLANCHIMENT NON AGRESSIF

(30) Priorität: 08.06.2009 DE 102009026811
(43) Veröffentlichungstag der Anmeldung: 18.04.2012
(73) Patentinhaber: Henkel AG & Co. KGaA, 40589 Düsseldorf (DE)
(72) Erfinder: NORDSKOG, Anette, N-3237 Sandefjord (NO); RYBINSKI VON, Wolfgang, 40593 Düsseldorf (DE); HÄTZELT, André, 40591 Düsseldorf (DE); ERPENBACH, Siglinde, 40789 Monheim (DE); BALLAUFF, Matthias, 95444 Bayreuth (DE); POLZER, Frank, 95444 Bayreuth (DE)
(86) Internationale Anmeldenummer: PCT/EP2010/057413
(87) Internationale Veröffentlichungsnummer: WO 2010/142538

(56) Entgegenhaltungen:
- DE-A1- 10 163 331
- US-A- 5 429 769
- BALLAUFF ET AL: "Spherical polyelectrolyte brushes" PROGRESS IN POLYMER SCIENCE, PERGAMON PRESS, OXFORD, GB LNKD- DOI:10.1016/J.PROGPOLYMSCI.2007.05.002, Bd. 32, Nr. 10, 28. September 2007 (2007-09-28), Seiten 1135-1151, XP022277242 ISSN: 0079-6700

## Beschreibung

Die vorliegende Erfindung betrifft die Verwendung von sphärischen Polyelektrolyt-Bürsten (SPB) zur Verminderung der Schädigung von bleichverstärkenden Übergangsmetallkomplexen beim Behandeln von cellulosehaltigem Material, insbesondere beim Waschen von Textilien, ein schonendes Verfahren zum Behandeln von cellulosehaltigem Material in Gegenwart eines persauerstoffhaltigen Bleichmittels und eines bleichverstärkenden Übergangsmetallkomplexes, Mittel, welche persauerstoffhaltiges Bleichmittel und SPB, die bleichverstärkenden Übergangsmetallkomplex kolloidal gebunden enthalten, aufweisen, sowie ein Verfahren zur Herstellung von SPB, die bleichverstärkenden Übergangsmetallkomplex kolloidal gebunden enthalten.

Anorganische Persauerstoffverbindungen, insbesondere Wasserstoffperoxid und feste Persauerstoffverbindungen, die sich in Wasser unter Freisetzung von Wasserstoffperoxid lösen, wie Natriumperborat und Natriumcarbonat-Perhydrat, werden seit langem als Oxidationsmittel zu Desinfektions- und Bleichzwecken verwendet. Die Oxidationswirkung dieser Substanzen hängt in verdünnten Lösungen stark von der Temperatur ab; so erzielt man beispielsweise mit H₂O₂ oder Perborat in alkalischen Bleichflotten erst bei Temperaturen oberhalb von etwa 80 °C eine ausreichend schnelle Bleiche verschmutzter Textilien. Bei niedrigeren Temperaturen kann die Oxidationswirkung der anorganischen Persauerstoffverbindungen durch Zusatz sogenannter Bleichaktivatoren verbessert werden, für die zahlreiche Vorschläge, vor allem aus den Stoffklassen der N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Hydrotriazine, Urazole, Diketopiperazine, Sulfurylamide und Cyanurate, außerdem Carbonsäureanhydride, insbesondere Phthalsäureanhydrid, Carbonsäureester, insbesondere Natrium-nonanoyloxy-benzolsulfonat, Natrium-isononanoyloxy-benzolsulfonat und acylierte Zuckerderivate, wie Pentaacetylglukose, in der Literatur bekannt geworden sind. Durch Zusatz dieser Substanzen kann die Bleichwirkung wässriger Peroxidflotten so weit gesteigert werden, dass bereits bei Temperaturen um 60 °C im Wesentlichen die gleichen Wirkungen wie mit der Peroxidflotte allein bei 95 °C eintreten. Die Schädigung des Gewebes bleibt dabei in einem für den Verbraucher akzeptablen Rahmen.

Im Bemühen um energiesparende Wasch- und Bleichverfahren gewinnen in den letzten Jahren Anwendungstemperaturen deutlich unterhalb 60 °C, insbesondere unterhalb 45 °C bis herunter zur Kaltwassertemperatur an Bedeutung.

Bei diesen niedrigen Temperaturen läßt die Wirkung der bisher bekannten Aktivatorverbindungen in der Regel erkennbar nach. Es hat deshalb nicht an Bestrebungen gefehlt, für diesen Temperaturbereich wirksamere Bleichsysteme zu entwickeln. Ein Ansatzpunkt dazu ergibt sich durch den Einsatz von Wasserstoffperoxid-liefernden Verbindungen zusammen mit Übergangsmetallsalzen und -komplexen als sogenannten Bleichkatalysatoren. Bei diesen besteht, vermutlich wegen der hohen Reaktivität der aus ihnen und der Persauerstoffverbindung entstehenden oxidierenden Intermediate, allerdings die Gefahr der oxidativen Textilschädigung. Der Einsatz solcher Übergangsmetallkatalysatoren in Waschmitteln ist in der Praxis bisher erschwert worden, weil dann die Schädigung des Gewebes deutlich höher ist als bei einem Persäure-bildenden konventionellen System aus Bleichmittel und Bleichaktivator. Gleiches gilt sinngemäß für Bleichvorgänge, die bei der Herstellung von cellulosehaltigem Material, wie Zellstoff oder Papier, durchgeführt werden.

Die vorliegende Erfindung zielt darauf ab, bei der bleichenden Behandlung von cellulosehaltigem Material, beispielsweise beim Waschen von Textilien, die Schädigung des cellulosehaltigen Materials, beispielsweise eines Textils, beim Einsatz von bleichaktiven Katalysatoren zu erniedrigen, ohne die Bleichleistung dabei wesentlich zu beeinflussen.

Wenn man lineare Polyelektrolytketten an ein Latexpartikel bindet, erhält man sphärische Polyelektrolyt-Bürsten (SPB). Lineare Polyelektrolytketten sind beispielsweise erhältlich durch Polymerisation von ethylenisch ungesättigten Carbonsäuren. Latexpartikel sind beispielsweise durch Emulsionspolymerisation von Styrol zugänglich. Wenn man die Oberfläches des Latexpartikels mit einer dünnen Schicht eines Photoinitiators belegt, kann die Polymerisation von ethylenisch ungesättigten Carbonsäuren, wie beispielsweise Acrylsäure, durch Bestrahlung des mit dem Photoinitiators belegten Latexkerns gestartet werden, so dass das Polyelektrolyt auf den Latexkern aufgepfropft wird, wie von X. Guo, A. Weiss und M. Ballauff in Macromolecules 1999, S. 6043-6046 beschrieben.

Die nun beanspruchte Erfindung beruht zentral darauf, dass sich die Schädigung von cellulosehaltigem Material durch bleichaktive Katalysatoren erniedrigt, wenn der Katalysator zwischen die sphärisch bürstenförmig um den Latexkern angeordeten Polyelektrolytketten eingebettet ist.

Ein erster Gegenstand der Erfindung ist daher ein Verfahren zur Herstellung von sphärischen Polyelektrolyt-Bürsten (SPB), die bleichaktivierende Übergangsmetallkomplexverbindung kolloidal gebunden enthalten, wobei man bleichaktivierende Übergangsmetallkomplexverbindung in Anwesenheit von Wasser mit einer sphärischen Polyelektrolyt-Bürste (SPB) in Kontakt bringt.

Dabei liegt das Molverhältnis zwischen der molaren Anzahl funktioneller Gruppen in der Polyelektrolyt-Hülle zu zugefügter Übergangsmetallkomplexverbindung vorzugsweise im Bereich von 100:1 bis 2:1, insbesondere im Bereich von 10:1 bis 4:1.

Das erfindungsgemäße Herstellverfahren wird vorzugsweise bei Temperaturen im Bereich von 10 °C bis 70 °C, insbesondere von 20 °C bis 25 °C durchgeführt. In weiteren bevorzugten Ausführungsformen des Herstellverfahrens wird es bei pH-Werten im Bereich von pH 4 bis pH 10, insbesondere pH 5 bis pH 8, die durch Zugabe üblicher systemverträglicher Säuren oder Laugen eingestellt werden können, durchgeführt. Vorzugsweise legt man die sphärische Polyelektrolyt-Bürste vor und gibt die bleichaktivierende Übergangsmetallkomplexverbindung zu, wobei deren Dosierzeit in der Regel bei 10 Minuten bis 1 Stunde, insbesondere etwa 30 Minuten, liegt, aber, insbesondere bei kleinen Mengen, auch weniger als 1 s betragen kann, oder, zum Beispiel bei Verwendung von kontrolliertem Ionenaustausch über Ultrafiltration auch gegen Unendlich gehen kann. Nach Beendigung der Zugabe der bleichaktivierenden Übergangsmetallkomplexverbindung läßt man vorzugsweise noch 30 Minuten bis 48 Stunden, insbesondere 1 Stunde bis 24 Stunden, vorzugsweise unter Rühren, equilibrieren. Eine alternative Variante des erfindungsgemäßen Herstellverfahrens besteht darin, einen oder mehrere Liganden, welche mit einem Übergangsmetall in situ einen bleichverstärkenden Übergangsmetallkomplex bilden können, und das entsprechende Übergangsmetall in Salzform oder in Form eines nicht bleichaktiven Komplexes in Anwesenheit von Wasser mit einer sphärischen Polyelektrolyt-Bürste (SPB) in Kontakt zu bringen, wobei die oben angegebenen Bedingungen sinngemäß ebenfalls gelten, so dass sich die bleichaktivierende Übergangsmetallkomplexverbindung in Gegenwart der SPB erst bildet. Das separate In-Kontakt-Bringen kann durch gleichzeitige oder nacheinander erfolgende Zugabe erfolgen, wobei in letztgenannter Alternative vorzugsweise das Übergangsmetall vor dem Liganden zu dem SPB gegeben wird.

Ein weiterer Gegenstand der Erfindung ist eine sphärische Polyelektrolyt-Bürste (SPB), die bleichaktivierende Übergangsmetallkomplexverbindung kolloidal gebunden enthält.

Durch das erfindungsgemäße Herstellverfahren werden die bleichaktivierenden Übergangsmetallkomplexverbindungen in die aufgepfropten Polyelektrolyt-Seitenketten der sphärischen Polyelektrolyt-Bürste eingebettet und so stabilisiert. Dabei ist die Katalysatoroberfläche für Substrate, die sich in wässriger Lösung oder Dispersion befinden, weiterhin gut zugänglich. Größere Objekte, wie zum Beispiel die Oberfläche eines zu waschenden Textils oder eines zu reinigenden harten Gegenstandes, können durch die Einbettung des Katalysators nicht in direkten Kontakt zu dessen katalytischem Zentrum treten, so dass durch den Bleichkatalysator katalysierte Oxidationen dieser Oberflächen nicht stattfinden.

In diesem Aspekt ist daher ein weiterer Gegenstand der Erfindung ein Verfahren zur bleichenden Behandlung von cellulosehaltigem Material, insbesondere bei der Herstellung von Zellstoff oder Papier oder beim Waschen von Textilien, in Gegenwart eines persauerstoffhaltigen Bleichmittels und eines bleichverstärkenden Übergangsmetallkomplexes, welches dadurch gekennzeichnet ist, dass es in Anwesenheit von sphärischen Polyelektrolyt-Bürsten (SPB) durchgeführt wird.

Als bleichaktivierende Übergangsmetallkomplexverbindungen kommen insbesondere solche der Metalle Fe, Mn, Co, V, Ru, Ti, Mo, W, Cu und/oder Cr in Frage, beispielsweise Mangan-, Eisen-, Cobalt-, Ruthenium- oder Molybdän-Salenkomplexe, Mangan-, Eisen-, Cobalt-, Ruthenium- oder Molybdän-Carbonylkomplexe, Mangan-, Eisen-, Cobalt-, Ruthenium-, Molybdän-, Titan-, Vanadium- und Kupfer-Komplexe mit stickstoffhaltigen Tripod-Liganden, Cobalt-, Eisen-, Kupfer- und Ruthenium-Amminkomplexe, und Eisen- oder Mangan-Komplexe mit Polyazacycloalkan-Liganden, wie TACN.

Zu den bevorzugten bleichverstärkenden Übergangsmetallkomplexverbindungen gehören Metallkomplexe der Formel (I),

[LₙMₘXₚ]^{z} Y_{q} (I)

worin M Mangan oder Eisen oder Mischungen dieser Metalle bedeutet, welche im Oxidationszustand II, III, IV oder V vorliegen können, oder in Mischungen derselben, n und m unabhängig voneinander ganze Zahlen mit einem Wert von 1 bis 4 sind, X eine koordinierende oder überbrückende Spezies darstellt, p eine ganze Zahl mit einem Wert von 0 bis 12 ist, Y ein Gegenion ist, dessen Typ von der Ladung z des Komplexes abhangig ist, die positiv, Null oder negativ sein kann, q = z/[Ladung Y], und L ein Ligand ist, der ein makrocyclisches organisches Molekül der allgemeinen Formel 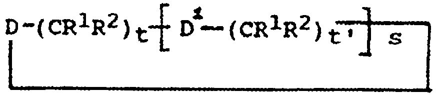 ist, worin jeder der Reste R¹ und R² Null, H, Alkyl oder Aryl, gegebenenfalls substituiert, sein kann; t und t' unabhängig voneinander 2 oder 3 sind; D und D¹ unabhängig voneinander N, NR, PR, O oder S sind, worin R H, Alkyl oder Aryl, gegebenenfalls substituiert, bedeutet; und s eine ganze Zahl mit einem Wert von 2 bis 5 ist, worin, falls D = N ist, eine der daran gebundenen Heterocarbonbindungen ungesättigt ist, was zur Herbeiführung eines N = CR¹-Teilstückes führt. Bevorzugtes Metall M ist Mangan. Die koordinierende oder überbrückende Spezies X ist vorzugsweise ein kleines koordinierendes Ion oder überbrückendes Molekül oder eine Mischung derselben, beispielsweise Wasser, OH⁻, O²⁻, S²⁻, -S(=O)-, N³⁻, HOO⁻, O₂²⁻, O₂⁻, Amin, Cl⁻, SCN⁻, N₃⁻, und Carboxylat wie zum Beispiel Acetat oder Mischungen aus diesen. Wenn die Ladung z positiv ist, ist Y ein Anion, wie beispielsweise Chlorid, Bromid, Iodid, Nitrat, Perchlorat, Rhodanid, Hexafluorphosphat, Sulfat, Alkylsulfat, Alkylsulfonat oder Acetat; wenn die Ladung z negativ ist, ist Y ein Kation, wie beispielsweise ein Alkaliion, Ammoniumion oder Erdalkaliion. Zu den bevorzugten Liganden L gehören 1,4,7-Triazacyclononan, 1,4,7-Trimethyl-1,4,7-triazacyclononan, 1,5,9-Trimethyl-1,5,9-triazacyclododecan und 1,2,4,7-Tetramethyl-1,4,7-triazacyclononan.

In einer weiteren bevorzugten Ausführungsform entspricht die bleichverstärkende Übergangsmetallkomplexverbindung der allgemeinen Formel (II), 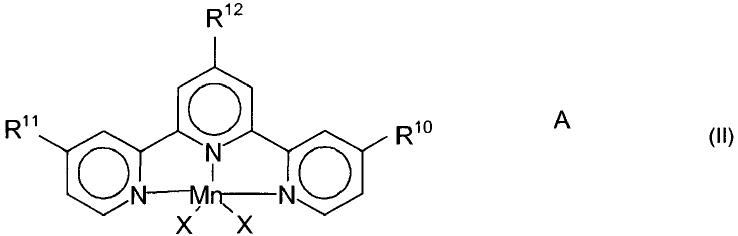 in der R¹⁰ und R¹¹ unabhängig voneinander für Wasserstoff, eine C₁₋₁₈-Alkylgruppe, eine Gruppe -NR¹³R¹⁴, eine Gruppe -N⁺R¹³R¹⁴R¹⁵ oder eine Gruppe

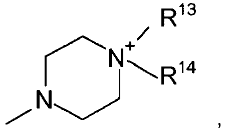

R¹² für Wasserstoff, -OH, oder eine C₁₋₁₈-Alkylgruppe, R¹³ , R¹⁴ und R¹⁵ unabhängig voneinander für Wasserstoff, eine C₁₋₄-Alkyl- oder -Hydroxyalkylgruppe und X für Halogen stehen sowie A für einen ladungsausgleichenden Anionliganden steht, der je nach seiner Ladung und der Art und Anzahl der sonstigen Ladungen, insbesondere der Ladung des Mangan-Zentralatoms, auch fehlen oder mehrfach vorhanden sein kann. Mangan kann darin wie auch in den Komplexen gemäß Formel (I) die Oxidationsstufe II, III, IV oder V aufweisen. Gewünschtenfalls, wenn auch weniger bevorzugt, können in derartigen Komplexverbindungen anstelle des Mn-Zentralatoms auch andere Übergangsmetalle, wie beispielsweise Fe, Co, Ni, V, Ru, Ti, Mo, W, Cu und/oder Cr, vorhanden sein.

Das erfindungsgemäße Verfahren zur bleichenden Behandlung von cellulosehaltigem Material kann gewünschtenfalls bei Temperaturen im Bereich von 10 °C bis 95 °C durchgeführt werden. Bevorzugt liegt die Temperatur im Bereich von 20 °C bis 40 °C.

Das erfindungsgemäße Verfahren zur bleichenden Behandlung von cellulosehaltigem Material kann gewünschtenfalls bei pH-Werten im schwach sauren bis alkalischen Bereich, insbesondere im Bereich von pH 5 bis pH 12, vorzugsweise pH 8 bis pH 11, durchgeführt werden.

In einem erfindungsgemäßen Textilwaschverfahren bevorzugte Persauerstoffkonzentrationen (berechnet als H₂O₂) in der Waschlauge liegen im Bereich von 0,001 g/l bis 10 g/l, insbesondere 0,1 g/l bis 1 g/l. Die Konzentration an bleichverstärkendem Übergangsmetallkomplex in der Waschlauge liegt vorzugsweise im Bereich von 0,1 µmol/ bis 100 µmol/l, insbesondere 0,5 µmol/l bis 25 µmol/l.

Das erfindungsgemäße Verfahren zur bleichenden Behandlung von cellulosehaltigem Material läßt sich beispielsweise dadurch realisieren, dass man persauerstoffhaltiges Bleichmittel, bleichverstärkenden Übergangsmetallkomplex und die SPB jeweils separat einer Behandlungslösung für cellulosehaltiges Material, beispielsweise einer Waschlösung, die ein übliches Waschmittel enthalten kann, zusetzt. Es ist auch möglich, nicht den fertigen bleichverstärkenden Übergangsmetallkomplex, sondern separat einen oder mehrere Liganden, welche im Prozess mit einem Übergangsmetall in situ einen bleichverstärkenden Übergangsmetallkomplex bilden können, einzusetzen; das Übergangsmetall kann dann ebenfalls separat in Form eines Salzes oder nicht bleichverstärkenden Komplexes zudosiert werden, oder es wird in den Prozess als Bestandteil des dafür eingesetzten Brauchwassers oder über das zu behandelnde cellulosehaltige Material, bei zu reinigenden Textilien beispielsweise als Bestandteil der zu entfernenden Anschmutzung, in den Prozess eingebracht. Dabei ist es möglich und bevorzugt, den bleichverstärkenden Übergangsmetallkomplex und die SPB gleichzeitig, das heißt insbesondere als vorzugsweise wasserhaltiges beziehungsweise als wässrige Lösung vorliegendes Vorgemisch, oder vorzugsweise in Form einer SPB, die bleichverstärkenden Übergangsmetallkomplex kolloidal gebunden enthält, gemeinsam einzubringen.

Ein weiterer Gegenstand der Erfindung ist die Verwendung von sphärischen Polyelektrolyt-Bürsten (SPB) zur Verminderung der Schädigung von cellulosehaltigem Material, beispielsweise von Textilien, durch die Anwesenheit bleichverstärkender Übergangsmetallkomplexe bei der bleichenden Behandlung von cellulosehaltigem Material, beispielsweise beim Waschen von Textilien.

Überraschenderweise wurde gefunden, dass sich durch den Einsatz der SPB nicht nur die Schädigung des cellulosehaltigen Materials verringert, sondern auch die Bleichleistung des Systems aus persauerstoffhaltigem Bleichmittel und bleichverstärkendem Übergangsmetallkomplex verbessert. Ein weiterer Gegenstand der Erfindung ist daher die Verwendung von sphärischen Polyelektrolyt-Bürsten (SPB) zur Verbesserung der Bleichleistung von bleichverstärkendem Übergangsmetallkomplex in wässrigen Lösungen, die persauerstoffhaltiges Bleichmittel enthalten.

In einer weiteren bevorzugten Ausführungsform der Erfindung setzt man ein Mittel ein, welches persauerstoffhaltiges Bleichmittel, bleichverstärkenden Übergangsmetallkomplex oder einen Liganden, welcher im Prozess mit einem Übergangsmetall in situ einen bleichverstärkenden Übergangsmetallkomplex bilden kann, und sphärische Polyelektrolyt-Bürste (SPB) enthält, wobei vorzugsweise die SPB den bleichverstärkenden Übergangsmetallkomplex kolloidal gebunden enthält. Ein solches textilschonendes Waschmittel ist ein weiterer Gegenstand der Erfindung.

Erfindungsgemäße Waschmittel, die in fester Form oder als Flüssigkeiten oder Pasten vorliegen können, können als solche in maschinellen oder manuellen Waschverfahren eingesetzt werden, aber auch als Waschmitteladditive und/oder als Wäsche- beziehungsweise Textilvorbehandlungsmittel zum Einsatz kommen.

Als Waschmitteladditiv werden erfindungsgemäße Mittel zusammen mit einem üblichen Waschmittel eingesetzt. Dies ist vor allem dann sinnvoll, wenn der Anwender das übliche Waschmittel in seiner Bleichleistung verbessern will. Bei der Wäschevorbehandlung werden die erfindungsgemäßen Mittel eingesetzt, um die Entfernung von verkrustetem Schmutz oder Flecken, insbesondere "Problemflecken", wie Kaffee, Tee, Rotwein, Gras, oder Fruchtsaft, zu verbessern, die durch Waschen mit üblichen Textilwaschmaschitteln nur schwierig zu entfernen, aber einem oxidativen Angriff zugänglich sind. Ein weiteres Einsatzgebiet solcher Mittel ist die Entfernung lokaler Anschmutzungen von ansonsten sauberen Oberflächen, so dass sich ein aufwendigerer Wasch- oder Reinigungsvorgang des entsprechenden Gesamtgebildes, sei dieses nun ein Kleidungsstück oder ein Teppich oder ein Möbelpolsterteil, vermeiden läßt. Dazu kann man in einfacher Weise ein erfindungsgemäßes Mittel, gegebenenfalls zusammen mit einer Wassermenge, welche zur vollständigen Auflösung des Mittels nicht ausreicht, auf die textile Oberfläche beziehungsweise deren zu reinigenden Teil aufbringen, gegebenenfalls mechanische Energie, beispielsweise durch Reiben mit einem Tuch oder einem Schwamm, einbringen und nach einer vom Anwender festzulegenden Zeit das Mittel und die oxidativ aufgebrochene Anschmutzung durch Auswaschen mit Wasser, beispielsweise mit Hilfe eines angefeuchteten Tuches oder Schwammes, entfernen.

Vorzugsweise enthalten die erfindungsgemäßen Mittel 0,01 Gew.-% bis 0,5 Gew.-%, insbesondere 0,02 Gew.-% bis 0,3 Gew.-% an bleichverstärkendem Übergangsmetallkomplex, der vorzugsweise kolloidal an die SPB gebunden ist. Alternativ oder gegebenenfalls auch zusätzlich kann das erfindungsgemäße Mittel auch lediglich die SPB und einen oder mehrere Liganden enthalten, welche im Waschprozess mit einem Übergangsmetall in situ einen bleichverstärkenden Übergangsmetallkomplex bilden können. Das Übergangsmetall kann dabei in Form eines Salzes oder nicht bleichverstärkenden Komplexes ebenfalls im Waschmittel vorhanden sein oder wird in den Waschprozess als Bestandteil des dafür eingesetzten Brauchwassers oder über das zu reinigende Textil, beispielsweise als Bestandteil der zu entfernenden Anschmutzung, in den Waschprozess eingebracht werden.

Die erfindungsgemäßen Wasch- und Reinigungsmittel können neben dem persauerstoffhaltigen Bleichmittel, dem bleichverstärkenden Übergangsmetallkomplex beziehungsweise dem Liganden, welcher in situ den bleichverstärkenden Übergangsmatallkomplex bilden kann, und der SPB im Prinzip alle bekannten und in derartigen Mitteln üblichen Inhaltsstoffe enthalten. Die erfindungsgemäßen Wasch- und Reinigungsmittel können insbesondere Buildersubstanzen, oberflächenaktive Tenside, Enzyme, Sequestrierungsmittel, Elektrolyte, pH-Regulatoren, Polymere mit Spezialeffekten, wie soil release-Polymere, Farbübertragungsinhibitoren, Vergrauungsinhibitoren, knitterreduzierende Wirkstoffe und formerhaltende Wirkstoffe, und weitere Hilfsstoffe, wie optische Aufheller, Schaumregulatoren, zusätzliche Persauerstoff-Aktivatoren, Farb- und Duftstoffe enthalten.

Als für den Einsatz im erfindungsgemäßen Verfahren, bei der erfindungsgemäßen Verwendung und in erfindungsgemäßen Mitteln geeignete Persauerstoffverbindungen kommen insbesondere organische Persäuren beziehungsweise persaure Salze organischer Säuren, wie Phthalimidopercapronsäure, Perbenzoesäure oder Salze der Diperdodecandisäure, Wasserstoffperoxid und unter den Waschbedingungen Wasserstoffperoxid abgebende anorganische Salze, zu denen Alkaliperborat, Alkalipercarbonat, -persilikat und/oder -persulfat wie Caroat gehören, in Betracht. Sofern feste Persauerstoffverbindungen eingesetzt werden sollen, können diese in Form von Pulvern oder Granulaten verwendet werden, die auch in im Prinzip bekannter Weise umhüllt sein können. Der Zusatz geringer Mengen bekannter Bleichmittelstabilisatoren wie beispielsweise von Phosphonaten, Boraten beziehungsweise Metaboraten und Metasilikaten sowie Magnesiumsalzen wie Magnesiumsulfat kann zweckdienlich sein. Ein erfindungsgemäßes Mittel enthält vorzugsweise 15 Gew.-% bis 50 Gew.-%, insbesondere 18 Gew.-% bis 35 Gew.-% persauerstoffhaltiges Bleichmittel, insbesondere Alkalipercarbonat. Alternativ oder gegebenenfalls zusätzlich kann im erfindungsgemäßen Verfahren Wasserstoffperoxid auch durch ein enzymatisches System, nämlich eine Oxidase in Kombination mit ihrem Substrat, erzeugt werden, das in einer bevorzugten Ausgestaltung der Erfindung Bestandteil des erfindungsgemäßen Mittels ist und in diesen das persauerstoffhaltige Bleichmittel teilweise oder vorzugsweise ganz ersetzen kann.

Zusätzlich zu der bleichverstärkenden Übergangsmetallkomplexverbindung können in den erfindungsgemäßen Mitteln gewünschtenfalls weitere als bleichaktivierende Wirkstoffe bekannte Verbindungen, insbesondere konventionelle Bleichaktivatoren, das heißt Verbindungen, die unter Perhydrolysebedingungen gegebenenfalls substituierte Perbenzoesäure und/oder Peroxocarbonsäuren mit 1 bis 10 C-Atomen, insbesondere 2 bis 4 C-Atomen ergeben, eingesetzt werden. Geeignet sind übliche Bleichaktivatoren, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxo-hexahydro-1,3,5-triazin (DADHT), acylierte Phenylsulfonate, insbesondere Nonanoyloxy- oder Isononanoyloxybenzolsulfonat, N-acylierte Capro- oder Valerolactame, insbesondere N-Acetylcaprolactam, acylierte mehrwertige Alkohole, insbesondere Triacetin, Ethylenglykoldiacetat und 2,5-Diacetoxy-2,5-dihydrofuran sowie acetyliertes Sorbit und Mannit, und acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton. Auch unter Perhydrolysebedingungen Perimidsäuren bildende Nitrile, wie 4-Morpholincarbonitril oder Ammoniumgruppen tragende Acetonitrile, können eingesetzt werden. Vorzugsweise sind die erfindungsgemäßen Mittel jedoch frei von solchen konventionellen Bleichaktivatoren.

Die erfindungsgemäßen Mittel können ein oder mehrere Tenside enthalten, wobei insbesondere anionische Tenside, nichtionische Tenside und deren Gemische in Frage kommen. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomem im Alkylrest brauchbar.

Geeignete anionische Tenside sind insbesondere Seifen und solche, die Sulfat- oder SulfonatGruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Derartige Tenside sind in den erfindungsgemäßen Reinigungs- oder Waschmitteln in Mengen von vorzugsweise 5 Gew.-% bis 50 Gew.-%, insbesondere von 8 Gew.-% bis 30 Gew.-%, enthalten.

Ein erfindungsgemäßes Mittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure, Ethylendiamin-N,N'-dibernsteinsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)carbonsäuren, insbesondere die durch Oxidation von Polysacchariden beziehungsweise Dextrinen zugänglichen Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5 000 und 200 000, die der Copolymeren zwischen 2 000 und 200 000, vorzugsweise 50 000 bis 120 000, jeweils bezogen auf freie Säure. Ein besonders bevorzugtes Acrylsäure-Maleinsäure-Copolymer weist eine relative Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einem veresterten Vinylalkohol oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure, wobei Maleinsäure besonders bevorzugt ist, und/oder ein Derivat einer Allylsulfonsäure, die in 2-Stellung mit einem Alkyl- oder Arylrest substituiert ist, sein. Derartige Polymere weisen im allgemeinen eine relative Molekülmasse zwischen 1 000 und 200 000 auf. Weitere bevorzugte Copolymere sind solche, die als Monomere vorzugsweise Acrolein und Acrylsäure/Acrylsäuresalze beziehungsweise Vinylacetat aufweisen. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein.

Als wasserlösliche anorganische Buildermaterialien kommen insbesondere polymere Alkaliphosphate, die in Form ihrer alkalischen neutralen oder sauren Natrium- oder Kaliumsalze vorliegen können, in Betracht. Beispiele hierfür sind Tetranatriumdiphosphat, Dinatriumdihydrogendiphosphat, Pentanatriumtriphosphat, sogenanntes Natriumhexametaphosphat sowie die entsprechenden Kaliumsalze beziehungsweise Gemische aus Natrium- und Kaliumsalzen. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen, das nach den Angaben der deutschen Patentschrift DE 24 12 837 bestimmt werden kann, liegt in der Regel im Bereich von 100 bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁·yH₂O eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl ß- als auch δ-Natriumdisilikate (Na₂Si₂O₅·yH₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5 werden in einer weiteren bevorzugten Ausführungsform erfindungsgemäßer Mittel eingesetzt. In einer bevorzugten Ausgestaltung erfindungsgemäßer Mittel setzt man ein granulares Compound aus Alkalisilikat und Alkalicarbonat ein, wie es zum Beispiel unter dem Namen Nabion® 15 im Handel erhältlich ist. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 1:10 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Buildersubstanzen sind in den erfindungsgemäßen Wasch- oder Reinigungsmitteln vorzugsweise in Mengen bis zu 60 Gew.-%, insbesondere von 5 Gew.-% bis 40 Gew.-%, enthalten, während die erfindungsgemäßen Desinfektionsmittel vorzugsweise frei von den lediglich die Komponenten der Wasserhärte komplexierenden Buildersubstanzen sind und bevorzugt nicht über 20 Gew.-%, insbesondere von 0,1 Gew.-% bis 5 Gew.-%, an schwermetallkomplexierenden Stoffen, vorzugsweise aus der Gruppe umfassend Aminopolycarbonsäuren, Aminopolyphosphonsäuren und Hydroxypolyphosphonsäuren und deren wasserlösliche Salze sowie deren Gemische, enthalten.

In einer bevorzugten Ausgestaltung der Erfindung weist ein erfindungsgemäßes Mittel einen wasserlöslichen Builderblock auf. Durch die Verwendung des Begriffes "Builderblock" soll hierbei ausgedrückt werden, dass die Mittel keine weiteren Buildersubstanzen enthalten als solche, die wasserlöslich sind, das heißt sämtliche in dem Mittel enthaltenen Buildersubstanzen sind in dem so charakterisierten "Block" zusammengefasst, wobei allenfalls die Mengen an Stoffen ausgenommen sind, die als Verunreinigungen beziehungsweise stabilisierende Zusätze in geringen Mengen in den übrigen Inhaltsstoffen der Mittel handelsüblicherweise enthalten sein können. Unter dem Begriff "wasserlöslich" soll dabei verstanden werden, dass sich der Builderblock bei der Konzentration, die sich durch die Einsatzmenge des ihn enthaltenden Mittels bei den üblichen Bedingungen ergibt, rückstandsfrei löst. Vorzugsweise sind mindestens 15 Gew.-% und bis zu 55 Gew.-%, insbesondere 25 Gew.-% bis 50 Gew.-% an wasserlöslichem Builderblock in den erfindungsgemäßen Mitteln enthalten. Dieser setzt sich vorzugsweise zusammen aus den Komponenten
a) 5 Gew.-% bis 35 Gew.-% Citronensäure, Alkalicitrat und/oder Alkalicarbonat, welches auch zumindest anteilig durch Alkalihydrogencarbonat ersetzt sein kann,
b) bis zu 10 Gew.-% Alkalisilikat mit einem Modul im Bereich von 1,8 bis 2,5,
c) bis zu 2 Gew.-% Phosphonsäure und/oder Alkaliphosphonat,
d) bis zu 50 Gew.-% Alkaliphosphat, und
e) bis zu 10 Gew.-% polymerem Polycarboxylat,
wobei die Mengenangaben sich auf das gesamte Wasch- beziehungsweise Reinigungsmittel beziehen. Dies gilt auch für alle anderen Mengenangaben, sofern nicht ausdrücklich anders angegeben.

In einer bevorzugten Ausführungsform erfindungsgemäßer Mittel enthält der wasserlösliche Builderblock mindestens 2 der Komponenten b), c), d) und e) in Mengen größer 0 Gew.-%.

Hinsichtlich der Komponente a) sind in einer bevorzugten Ausführungsform erfindungsgemäßer Mittel 15 Gew.-% bis 25 Gew.-% Alkalicarbonat, welches zumindest anteilig durch Alkalihydrogencarbonat ersetzt sein kann, und bis zu 5 Gew.-%, insbesondere 0,5 Gew.-% bis 2,5 Gew.-% Citronensäure und/oder Alkalicitrat enthalten. In einer alternativen Ausführungsform erfindungsgemäßer Mittel sind als Komponente a) 5 Gew.-% bis 25 Gew.-%, insbesondere 5 Gew.-% bis 15 Gew.-% Citronensäure und/oder Alkalicitrat und bis zu 5 Gew.-%, insbesondere 1 Gew.-% bis 5 Gew.-% Alkalicarbonat, welches zumindest anteilig durch Alkalihydrogencarbonat ersetzt sein kann, enthalten. Falls sowohl Alkalicarbonat wie auch Alkalihydrogencarbonat vorhanden sind, weist die Komponte a) Alkalicarbonat und Alkalihydrogencarbonat vorzugsweise im Gewichtsverhältnis von 10:1 bis 1:1 auf.

Hinsichtlich der Komponente b) sind in einer bevorzugten Ausführungsform erfindungsgemäßer Mittel 1 Gew.-% bis 5 Gew.-% Alkalisilikat mit einem Modul im Bereich von 1,8 bis 2,5 enthalten.

Hinsichtlich der Komponente c) sind in einer bevorzugten Ausführungsform erfindungsgemäßer Mittel 0,05 Gew.-% bis 1 Gew.-% Phosphonsäuren und/oder Alkaliphosphonat enthalten. Unter Phosphonsäuren werden dabei auch gegebenenfalls substituierte Alkyl- und Arylphosphonsäuren, wie beispielsweise Phenylphosphonsäure, verstanden, die auch mehrere Phosphonsäuregruppierungen aufweisen könne (sogenannte Polyphosphonsäuren). Bevorzugt werden sie ausgewählt aus den Hydroxy- und/oder Aminoalkylphosphonsäuren und/oder deren Alkalisalzen, wie zum Beispiel Dimethylaminomethandiphosphonsäure, 3-Aminopropan-1-hydroxy-1,1-diphosphonsäure, 1-Amino-1-phenyl-methandiphosphonsäure, 1-Hydroxyethan-1,1-diphosphonsäure (HEDP), Amino-tris(methylenphosphonsäure), und acylierte Derivate der phosphorigen Säure, die auch in beliebigen Mischungen eingesetzt werden können.

Hinsichtlich der Komponente d) sind in einer bevorzugten Ausführungsform erfindungsgemäßer Mittel 15 Gew.-% bis 35 Gew.-% Alkaliphosphat, insbesondere Trinatriumpolyphosphat, enthalten. Alkaliphosphat ist dabei die summarische Bezeichnung für die Alkalimetall- (insbesondere Natrium-und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen beziehungsweise Kalkinkrustationen in Geweben und tragen überdies zur Reinigungsleistung bei. Natriumdihydrogenphosphat, NaH₂PO₄, existiert als Dihydrat (Dichte 1,91 gcm⁻³, Schmelzpunkt 60°) und als Monohydrat (Dichte 2,04 gcm⁻³). Beide Salze sind weiße, in Wasser sehr leicht lösliche Pulver, die beim Erhitzen das Kristallwasser verlieren und bei 200°C in das schwach saure Diphosphat (Dinatriumhydrogendiphosphat, Na₂H₂P₂O₇), bei höherer Temperatur in Natiumtrimetaphosphat (Na₃P₃O₉) und Madrellsches Salz übergehen. NaH₂PO₄ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), KH₂PO₄, ist ein weißes Salz der Dichte 2,33 gcm⁻³, hat einen Schmelzpunkt 253° (Zersetzung unter Bildung von (KPO₃)ₓ, Kaliumpolyphosphat) und ist leicht löslich in Wasser. Dinatriumhydrogenphosphat (sekundäres Natriumphosphat), Na₂HPO₄, ist ein farbloses, sehr leicht wasserlösliches kristallines Salz. Es existiert wasserfrei und mit 2 Mol. (Dichte 2,066 gcm⁻³, Wasserverlust bei 95°), 7 Mol. (Dichte 1,68 gcm⁻³, Schmelzpunkt 48° unter Verlust von 5 H₂O) und 12 Mol. Wasser (Dichte 1,52 gcm⁻³, Schmelzpunkt 35° unter Verlust von 5 H₂O), wird bei 100° wasserfrei und geht bei stärkerem Erhitzen in das Diphosphat Na₄P₂O₇ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres od. zweibasiges Kaliumphosphat), K₂HPO₄, ist ein amorphes, weißes Salz, das in Wasser leicht löslich ist. Trinatriumphosphat, tertiäres Natriumphosphat, Na₃PO₄, sind farblose Kristalle, die als Dodecahydrat eine Dichte von 1,62 gcm⁻³ und einen Schmelzpunkt von 73-76°C (Zersetzung), als Decahydrat (entsprechend 19-20% P₂O₅) einen Schmelzpunkt von 100°C und in wasserfreier Form (entsprechend 39-40% P₂O₅) eine Dichte von 2,536 gcm⁻³ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), K₃PO₄, ist ein weißes, zerfließliches, körniges Pulver der Dichte 2,56 gcm⁻³, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden in der Reinigungsmittel-Industrie die leichter löslichen, daher hochwirksamen, Kaliumphosphate gegenüber entsprechenden Natrium-Verbindungen vielfach bevorzugt. Tetranatriumdiphosphat (Natriumpyrophosphat), Na₄P₂O₇, existiert in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust). Bei Substanzen sind farblose, in Wasser mit alkalischer Reaktion lösliche Kristalle. Na₄P₂O₇ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), K₄P₂O₇, existiert in Form des Trihydrats und stellt ein farbloses, hygroskopisches Pulver mit der Dichte 2,33 gcm⁻³ dar, das in Wasser löslich ist, wobei der pH-Wert der 1%igen Lösung bei 25° 10,4 beträgt. Durch Kondensation des NaH₂PO₄ beziehungsweise des KH₂PO₄ entstehen höhermolekulare Natrium- und Kaliumphosphate, bei denen man cyclische Vertreter, die Natrium- beziehungsweise Kaliummetaphosphatem und kettenförmige Typen, die Natrium- beziehungsweise Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Madrellsches Salz. Alle höheren Natrium- und Kaliumphosphate werden gemeinsam als kondensierte Phosphate bezeichnet. Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. In 100 g Wasser lösen sich bei Zimmertemperatur etwa 17 g, bei 60° ca. 20 g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lsg. durch Versprühen entwässert. Ähnlich wie Grahamsches Salz und Natriumdiphosphat löst Pentanatriumtriphosphat viele unlösliche Metall-Verbindungen (auch Kalkseifen usw.). Pentakaliumtriphosphat, K₅P₃O₁₀ (Kaliumtripolyphosphat), kommt beispielsweise in Form einer 50 Gew.-%-igen Lösung (> 23% P₂O₅, 25% K₂O) in den Handel. Die Kaliumpolyphosphate finden in der Wasch- und Reinigungsmittel-Industrie breite Verwendung. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

(NaPO₃)₃ + 2 KOH → Na₃K₂P₃O₁₀ + H₂O

Diese sind erfindungsgemäß genau wie Natriumtripolyphosphat, Kaliumtripolyphosphat oder Mischungen aus diesen beiden einsetzbar; auch Mischungen aus Natriumtripolyphosphat und Natri-umkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind erfindungsgemäß einsetzbar.

Hinsichtlich der Komponente e) sind in einer bevorzugten Ausführungsform erfindungsgemäßer Mittel 1,5 Gew.-% bis 5 Gew.-% polymeres Polycarboxylat, insbesondere ausgewählt aus den Polymerisations- beziehungsweise Copolymerisationsprodukten von Acrylsäure, Methacrylsäure und/oder Maleinsäure enthalten. Unter diesen sind die Homopolymere der Acrylsäure und unter diesen wiederum solche mit einer mittleren Molmasse im Bereich von 5 000 D bis 15 000 D (PA-Standard) besonders bevorzugt.

Als in den Mitteln verwendbare Enzyme kommen außer der obengenannten Oxidase solche aus der Klasse der Proteasen, Lipasen, Cutinasen, Amylasen, Pullulanasen, Mannanasen, Cellulasen, Hemicellulasen, Xylanasen und Peroxidasen sowie deren Gemische in Frage, beispielsweise Proteasen wie BLAP®, Optimase®, Opticlean®, Maxacal®, Maxapem®, Alcalase®, Esperase®, Savinase®, Durazym® und/oder Purafect® OxP, Amylasen wie Termamyl®, Amylase-LT®, Maxamyl®, Duramyl® und/oder Purafect® OxAm, Lipasen wie Lipolase®, Lipomax®, Lumafast® und/oder Lipozym®, Cellulasen wie Celluzyme® und/oder Carezyme®. Besonders geeignet sind aus Pilzen oder Bakterien, wie Bacillus subtilis, Bacillus licheniformis, Streptomyces griseus, Humicola lanuginosa, Humicola insolens, Pseudomonas pseudoalcaligenes oder Pseudomonas cepacia gewonnene enzymatische Wirkstoffe. Die gegebenenfalls verwendeten Enzyme können an Trägerstoffen adsorbiert und/oder in Hüllsubstanzen eingebettet sein, um sie gegen vorzeitige Inaktivierung zu schützen. Sie sind in den erfindungsgemäßen Wasch-, Reinigungs- und Desinfektionsmitteln vorzugsweise in Mengen bis zu 10 Gew.-%, insbesondere von 0,2 Gew.-% bis 2 Gew.-%, enthalten, wobei besonders bevorzugt gegen oxidativen Abbau stabilisierte Enzyme eingesetzt werden.

In einer bevorzugten Ausführungsform der Erfindung enthält das Mittel 5 Gew.-% bis 50 Gew.-%, insbesondere 8 - 30 Gew.-% anionisches und/oder nichtionisches.Tensid, bis zu 60 Gew.-%, insbesondere 5 - 40 Gew.-% Buildersubstanz und 0,2 Gew.-% bis 2 Gew.-% Enzym, ausgewählt aus den Proteasen, Lipasen, Cutinasen, Amylasen, Pullulanasen, Mannanasen, Cellulasen, Oxidasen und Peroxidasen sowie deren Gemischen.

Zur Einstellung eines gewünschten, sich durch die Mischung der übrigen Komponenten beim Zugeben von Wasser nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln vorzugsweise nicht über 20 Gew.-%, insbesondere von 1,2 Gew.-% bis 17 Gew.-%, enthalten.

Schmutzablösevermögende Polymere, die oft als "Soil Release"-Wirkstoffe oder wegen ihres Vermögens, die behandelte Oberfläche, zum Beispiel der Faser, schmutzabstoßend auszurüsten, als "Soil Repellents" bezeichnet werden, sind beispielsweise nichtionische oder kationische Cellulosederivate. Zu den insbesondere polyesteraktiven schmutzablösevermögenden Polymeren gehören Copolyester aus Dicarbonsäuren, beispielsweise Adipinsäure, Phthalsäure oder Terephthalsäure, Diolen, beispielsweise Ethylenglykol oder Propylenglykol, und Polydiolen, beispielsweise Polyethylenglykol oder Polypropylenglykol. Zu den bevorzugt eingesetzten schmutzablösevermögenden Polyestern gehören solche Verbindungen, die formal durch Veresterung zweier Monomerteile zugänglich sind, wobei das erste Monomer eine Dicarbonsäure HOOC-Ph-COOH und das zweite Monomer ein Diol HO-(CHR²¹-)ₐOH, das auch als polymeres Diol H-(O-(CHR²¹-)ₐ)_{b}OH vorliegen kann, ist. Darin bedeutet Ph einen o-, m- oder p-Phenylenrest, der 1 bis 4 Substituenten, ausgewählt aus Alkylresten mit 1 bis 22 C-Atomen, Sulfonsäuregruppen, Carboxylgruppen und deren Mischungen, tragen kann, R²¹ Wasserstoff, einen Alkylrest mit 1 bis 22 C-Atomen und deren Mischungen, a eine Zahl von 2 bis 6 und b eine Zahl von 1 bis 300. Vorzugsweise liegen in den aus diesen erhältlichen Polyestern sowohl Monomerdioleinheiten -O-(CHR²¹-)ₐO- als auch Polymerdioleinheiten -(O-(CHR²¹-)ₐ)_{b}O-vor. Das molare Verhältnis von Monomerdioleinheiten zu Polymerdioleinheiten beträgt vorzugsweise 100:1 bis 1:100, insbesondere 10:1 bis 1:10. In den Polymerdioleinheiten liegt der Polymerisationsgrad b vorzugsweise im Bereich von 4 bis 200, insbesondere von 12 bis 140. Das Molekulargewicht beziehungsweise das mittlere Molekulargewicht oder das Maximum der Molekulargewichtsverteilung bevorzugter schmutzablösevermögender Polyester liegt im Bereich von 250 bis 100 000, insbesondere von 500 bis 50 000. Die dem Rest Ph zugrundeliegende Säure wird vorzugsweise aus Terephtalsäure, Isophthalsäure, Phthalsäure, Trimellithsäure, Mellithsäure, den Isomeren der Sulfophthalsäure, Sulfoisophthalsäure und Sulfoterephtalsäure sowie deren Gemischen ausgewählt. Sofern deren Säuregruppen nicht Teil der Esterbindungen im Polymer sind, liegen sie vorzugsweise in Salzform, insbesondere als Alkali- oder Ammoniumsalz vor. Unter diesen sind die Natrium- und Kaliumsalze besonders bevorzugt. Gewünschtenfalls können statt des Monomers HOOC-Ph-COOH geringe Anteile, insbesondere nicht mehr als 10 Mol-% bezogen auf den Anteil an Ph mit der oben gegebenen Bedeutung, anderer Säuren, die mindestens zwei Carboxylgruppen aufweisen, im schmutzablösevermögenden Polyester enthalten sein. Zu diesen gehören beispielsweise Alkylen- und Alkenylendicarbonsäuren wie Malonsäure, Bernsteinsäure, Fumarsäure, Maleinsäure, Glutarsäure, Adipinsäure, Pimelinsäure, Korksäure, Azelainsäure und Sebacinsäure. Zu den bevorzugten Diolen HO-(CHR²¹-)ₐOH gehören solche, in denen R²¹ Wasserstoff und a eine Zahl von 2 bis 6 ist, und solche, in denen a den Wert 2 aufweist und R¹¹ unter Wasserstoff und den Alkylresten mit 1 bis 10, insbesondere 1 bis 3 C-Atomen ausgewählt wird. Unter den letztgenannten Diolen sind solche der Formel HO-CH₂-CHR¹¹-OH, in der R¹¹ die obengenannte Bedeutung besitzt, besonders bevorzugt. Beispiele für Diolkomponenten sind Ethylenglykol, 1,2-Propylenglykol, 1,3-Propylenglykol, 1,4-Butandiol, 1,5-Pentandiol, 1,6-Hexandiol, 1,8-Octandiol, 1,2-Decandiol, 1,2-Dodecandiol und Neopentylglykol. Besonders bevorzugt unter den polymeren Diolen ist Polyethylenglykol mit einer mittleren Molmasse im Bereich von 1000 bis 6000. Gewünschtenfalls können diese Polyester auch endgruppenverschlossen sein, wobei als Endgruppen Alkylgruppen mit 1 bis 22 C-Atomen und Ester von Monocarbonsäuren in Frage kommen. Den über Esterbindungen gebundenen Endgruppen können Alkyl-, Alkenyl- und Arylmonocarbonsäuren mit 5 bis 32 C-Atomen, insbesondere 5 bis 18 C-Atomen, zugrundeliegen. Zu diesen gehören Valeriansäure, Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure, Benzoesäure, die 1 bis 5 Substituenten mit insgesamt bis zu 25 C-Atomen, insbesondere 1 bis 12 C-Atomen tragen kann, beispielsweise tert.-Butylbenzoesäure. Den Endgruppen können auch Hydroxymonocarbonsäuren mit 5 bis 22 C-Atomen zugrundeliegen, zu denen beispielsweise Hydroxyvaleriansäure, Hydroxycapronsäure, Ricinolsäure, deren Hydrierungsprodukt Hydroxystearinsäure sowie o-, m- und p-Hydroxybenzoesäure gehören. Die Hydroxymonocarbonsäuren können ihrerseits über ihre Hydroxylgruppe und ihre Carboxylgruppe miteinander verbunden sein und damit mehrfach in einer Endgruppe vorliegen. Vorzugsweise liegt die Anzahl der Hydroxymonocarbonsäureeinheiten pro Endgruppe, das heißt ihr Oligomerisierungsgrad, im Bereich von 1 bis 50, insbesondere von 1 bis 10. In einer bevorzugten Ausgestaltung der Erfindung werden Polymere aus Ethylenterephthalat und Polyethylenoxid-terephthalat, in denen die Polyethylenglykol-Einheiten Molgewichte von 750 bis 5000 aufweisen und das Molverhältnis von Ethylenterephthalat zu Polyethylenoxid-terephthalat 50:50 bis 90:10 beträgt, allein oder in Kombination mit Cellulosederivaten verwendet.

Zu den für den Einsatz in erfindungsgemäßen Mitteln für die Wäsche von Textilien in Frage kommenden Farbübertragungsinhibitoren gehören insbesondere Polyvinylpyrrolidone, Polyvinylimidazole, polymere N-Oxide wie Poly-(vinylpyridin-N-oxid) und Copolymere von Vinylpyrrolidon mit Vinylimidazol und gegebenenfalls weiteren Monomeren.

Die erfindungsgemäßen Mittel zum Einsatz in der Textilwäsche können Knitterschutzmittel enthalten, da textile Flächengebilde, insbesondere aus Reyon, Wolle, Baumwolle und deren Mischungen, zum Knittern neigen können, weil die Einzelfasern gegen Durchbiegen, Knicken, Pressen und Quetschen quer zur Faserrichtung empfindlich sind. Hierzu zählen beispielsweise synthetische Produkte auf der Basis von Fettsäuren, Fettsäureestern, Fettsäureamiden, -alkylolestern, -alkylolamiden oder Fettalkoholen, die meist mit Ethylenoxid umgesetzt sind, oder Produkte auf der Basis von Lecithin oder modifizierter Phosphorsäureester.

Vergrauungsinhibitoren haben die Aufgabe, den von der harten Oberfläche und insbesondere von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Die Waschmittel können optische Aufheller, unter diesen insbesondere Derivate der Diaminostilbendisulfonsäure beziehungsweise deren Alkalimetallsalze, enthalten. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Insbesondere beim Einsatz in maschinellen Wasch- und Reinigungsverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

In erfindungsgemäßen Mitteln können außerdem Wirkstoffe zur Vermeidung des Anlaufens von Gegenständen aus Silber, sogenannte Silberkorrosionsinhibitoren, eingesetzt werden. Bevorzugte Silberkorrosionsschutzmittel sind organische Disulfide, zweiwertige Phenole, dreiwertige Phenole, gegebenenfalls alkyl- oder aminoalkylsubstituierte Triazole wie Benzotriazol sowie Cobalt-, Mangan-, Titan-, Zirkonium-, Hafnium-, Vanadium- oder Cersalze und/oder -komplexe, in denen die genannten Metalle in einer der Oxidationsstufen II, III, IV, V oder VI vorliegen.

Ein erfindungsgemäßes Mittel kann zur Verstärkung der Desinfektionswirkung gegenüber speziellen Keimen zusätzlich zu den bisher genannten Inhaltsstoffen übliche antimikrobielle Wirkstoffe enthalten. Derartige antimikrobielle Zusatzstoffe sind in erfindungsgemäßen Mitteln vorzugsweise in Mengen nicht über 10 Gew.-%, insbesondere von 0,1 Gew.-% bis 5 Gew.-%, enthalten.

Ein erfindungsgemäßes Reinigungsmittel für harte Oberflächen kann darüber hinaus abrasiv wirkende Bestandteile, insbesondere aus der Gruppe umfassend Quarzmehle, Holzmehle, Kunststoffmehle, Kreiden und Mikroglaskugeln sowie deren Gemische, enthalten. Abrasivstoffe sind in den erfindungsgemäßen Reinigungsmitteln vorzugsweise nicht über 20 Gew.-%, insbesondere von 5 Gew.-% bis 15 Gew.-%, enthalten.

### Beispiele

Sphärische Polyelektrolyt-Bürsten (SPB) mit Polystyrolkern und darauf aufgepfropfter Acrylsäure wurden wie von X. Guo, A. Weiss und M. Ballauff in Macromolecules 1999, S. 6043-6046 beschrieben, hergestellt. Eine wässrige Disperson eines so hergestellten SPB wurde mit Wasser auf einen Feststoffgehalt von 1 Gew.-% verdünnt. 25 Mol%, bezogen auf den molaren Gehalt an funktionellen Gruppen in der Polyelektrolyt-Hülle, von 1,4,7-Trimethyl-1,4,7-triazacyclononan-Mangankomplex, Mn-Me₃TACN wurden unter Rühren bei Raumtemperatur und pH 5 zugesetzt, wobei das Mn-Me₃TACN durch kontrollierten Ionenaustausch über Ultrafiltration oder einfach als festes Pulver eindosiert wurde. Die Mischung wurde 24 Stunden lang gerührt; anschließend wurde die mit dem Katalysator beladene SPB durch Zentrifugieren isoliert.

Primärwaschkraft und Nassreißkraftverlust wurden in einem miniaturisierten Waschtest getestet. Es wurde mit einer vereinfachten Waschlauge V1 bestehend aus wässrigem H₂O₂ und SPB-Mn-Me₃TACN-Kompositpartikel gearbeitet. Zum Einsatz kam dabei eine Mischung von 0,35 g/l H₂O₂ und SPB-Mn-Me₃TACN-Kompositpartikel in einer Menge, die 5 mg/l Mn entspricht, in Wasser der Härte 16°dH, deren pH-Wert mittels NaOH auf pH 10,5 eingestellt worden war. Zum Vergleich wurden eine Lösung M1, der das SPB-MnO₂-Kompositpartike fehlte, und eine weitere Lösung M2, welche an Stelle des SPB-Mn-Me₃TACN-Kompositpartikels den freien Mn-Me₃TACN-Komplex in einer Menge, die 5 mg/l Mn entspricht, enthielt, ebenfalls getestet.

Für die Messung der Primärwaschleistung wurden Baumwollsubstrate, die mit einer standardisierten Teeanschmutzung versehen worden war, 30 Minuten bei 30 °C in den jeweiligen Lösungen behandelt. Das behandelte Stoffsubstrat wurde unter fließendem Wasser ausgewaschen und anschließend getrocknet und farbvermessen. In der nachfolgenden Tabelle ist der Helligkeitswert der Baumwollmeßstücke angegeben.

Für die Messung des Nassreißkraftverlusts wurden Baumwollstreifen mit definierter Breite (Fadenanzahl) 20 Mal über jeweils 45 Minuten bei 60°C in den jeweiligen Lösungen behandelt. Die Streifen wurden getrocknet und in eine Netzlösung eingetaucht, bevor sie mittels einer Zugprüfmaschine mit konstanter Zugprüfgeschwindigkeit zerrissen wurden. Die Zerreißkraft der behandelten Baumwolle wurde mit der Zerreißkraft der unbehandelten Baumwolle verglichen und der Nassreißkraftverlust in % berechnet.

Es wurden für die Primärwaschkraft und den Nassreißkraftverlust jeweils 5fach-Bestimmungen durchgeführt. In der nachfolgenden Tabelle sind die Mittelwerte angegeben.

| | Bleichleistung [Y-Wert] | Nassreißkraftverlust [%] |
|---|---|---|
| V1 | 54,3 | 7 |
| M1 | 59,9 | 77 |
| M2 | 59,9 | 49 |

## Patentansprüche

1. Verfahren zur Herstellung von sphärischen Polyelektrolyt-Bürsten (SPB), die bleichaktivierende Übergangsmetallkomplexverbindung kolloidal gebunden enthalten, wobei man bleichaktivierende Übergangsmetallkomplexverbindung in Anwesenheit von Wasser mit einer sphärischen Polyelektrolyt-Bürste (SPB) in Kontakt bringt.

2. Verfahren nach Anspruch 1, **dadurch gekennzeichnet, dass** das Molverhältnis zwischen der molaren Anzahl funktioneller Gruppen in der Polyelektrolyt-Hülle zu zugefügter Übergangsmetallkomplexverbindung im Bereich von 100:1 bis 2:1, insbesondere im Bereich von 10:1 bis 4:1 liegt.

3. Verfahren zur Herstellung von sphärischen Polyelektrolyt-Bürsten (SPB), die bleichaktivierende Übergangsmetallkomplexverbindung kolloidal gebunden enthalten, wobei man einen oder mehrere Liganden, welche mit einem Übergangsmetall in situ einen bleichverstärken-den Übergangsmetallkomplex bilden können, und das entsprechende Übergangsmetall in Salzform oder in Form eines nicht bleichaktiven Komplexes in Anwesenheit von Wasser mit einer sphärischen Polyelektrolyt-Bürste (SPB) in Kontakt bringt.

4. Sphärische Polyelektrolyt-Bürste (SPB), die bleichaktivierende Übergangsmetallkomplexverbindung kolloidal gebunden enthält.

5. Verfahren zur bleichenden Behandlung von cellulosehaltigem Material, insbesondere bei der Herstellung von Zellstoff oder Papier oder beim Waschen von Textilien, in Gegenwart eines persauerstoffhaltigen Bleichmittels und eines bleichverstärkenden Übergangsmetallkomplexes, **dadurch gekennzeichnet, dass** es in Anwesenheit von sphärischen Polyelektrolyt-Bürsten (SPB) durchgeführt wird.

6. Verfahren nach Anspruch 5, **dadurch gekennzeichnet, dass** es bei Temperaturen im Bereich von 10 °C bis 95 °C, insbesondere im Bereich von 20 °C bis 40 °C durchgeführt wird.

7. Verfahren nach Anspruch 5 oder 6, **dadurch gekennzeichnet, dass** es bei pH-Werten im Bereich von pH 5 bis pH 12, insbesondere von pH 8 bis pH 11, durchgeführt wird.

8. Textilwaschverfahren nach einem der Ansprüche 5 bis 7, **dadurch gekennzeichnet, dass** die Persauerstoffkonzentrationen (berechnet als H₂O₂) in der Waschlauge im Bereich von 0,001 g/l bis 10 g/l, insbesondere 0,1 g/l bis 1 g/l liegt.

9. Verfahren nach einem der Ansprüche 5 bis 8, **dadurch gekennzeichnet, dass** man nicht den fertigen bleichverstärkenden Übergangsmetallkomplex, sondern separat einen oder mehrere Liganden, welche im Prozess mit einem Übergangsmetall in situ einen bleichverstärkenden Übergangsmetallkomplex bilden können, einsetzt und das Übergangsmetall ebenfalls separat in Form eines Salzes oder nicht bleichverstärkenden Komplexes zudosiert oder es in den Prozess als Bestandteil des dafür eingesetzten Brauchwassers oder über das zu behandelnde cellulosehaltige Material einbringt.

10. Verwendung von sphärischen Polyelektrolyt-Bürsten (SPB) zur Verminderung der Schädigung von cellulosehaltigem Material durch die Anwesenheit bleichverstärkender Übergangsmetallkomplexe bei der bleichenden Behandlung von cellulosehaltigem Material.

11. Verwendung von sphärischen Polyelektrolyt-Bürsten (SPB) zur Verbesserung der Bleichleistung von bleichverstärkendem Übergangsmetallkomplex in wässrigen Lösungen, die persauerstoffhaltiges Bleichmittel enthalten.

12. Textilschonendes Waschmittel, enthaltend persauerstoffhaltiges Bleichmittel, bleichverstärkenden Übergangsmetallkomplex oder einen oder mehrere Liganden, welche im Waschprozess mit einem Übergangsmetall in situ einen bleichverstärkenden Übergangsmetallkomplex bilden können, und sphärische Polyelektrolyt-Bürste (SPB), insbesondere SPB, die den bleichverstärkenden Übergangsmetallkomplex kolloidal gebunden enthält.

13. Verfahren, Verwendung beziehungsweise Mittel nach einem der Ansprüche 1 bis 12, **dadurch gekennzeichnet, dass** die bleichverstärkende Übergangsmetallkomplexverbindung ein Metallkomplex der Formel (I) ist,
[LₙMₘXₚ]^{z} Y_{q} (I)
worin M Mangan oder Eisen oder Mischungen dieser Metalle bedeutet, welche im Oxidationszustand II, III, IV oder V vorliegen können, oder in Mischungen derselben, n und m unabhängig voneinander ganze Zahlen mit einem Wert von 1 bis 4 sind, X eine koordinierende oder überbrückende Spezies darstellt, p eine ganze Zahl mit einem Wert von 0 bis 12 ist, Y ein Gegenion ist, dessen Typ von der Ladung z des Komplexes abhangig ist, die positiv, Null oder negativ sein kann, q = z/[Ladung Y], und L ein Ligand ist, der ein makrocyclisches organisches Molekül der allgemeinen Formel 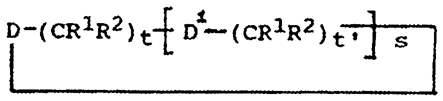 ist, worin jeder der Reste R¹ und R² Null, H, Alkyl oder Aryl, gegebenenfalls substituiert, sein kann; t und t' unabhängig voneinander 2 oder 3 sind; D und D¹ unabhängig voneinander N, NR, PR, O oder S sind, worin R H, Alkyl oder Aryl, gegebenenfalls substituiert, bedeutet; und s eine ganze Zahl mit einem Wert von 2 bis 5 ist, worin, falls D = N ist, eine der daran gebundenen Heterocarbonbindungen ungesättigt ist, was zur Herbeiführung eines N = CR¹-Teilstückes führt.

14. Verfahren, Verwendung beziehungsweise Mittel nach Anspruch 13, **dadurch gekennzeichnet, dass** der Komplex der Formel (I) mit M = Mangan und L = 1,4,7-Triazacyclononan, 1,4,7-Trimethyl-1,4,7-triazacyclononan, 1,5,9-Trimethyl-1,5,9-triazacyclododecan oder 1,2,4,7-Tetramethyl-1,4,7-triazacyclononan entspricht.

15. Verfahren, Verwendung beziehungsweise Mittel nach einem der Ansprüche 1 bis 12, **dadurch gekennzeichnet, dass** die bleichverstärkende Übergangsmetallkomplexverbindung ein Mangankomplex der Formel (II) ist, 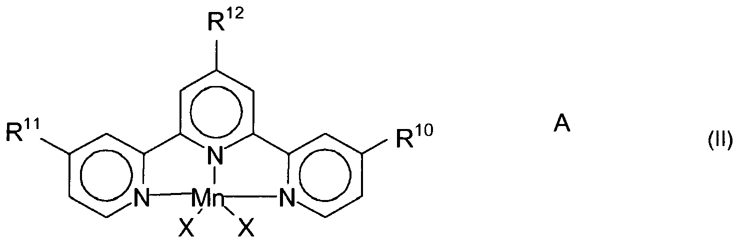 in der R¹⁰ und R¹¹ unabhängig voneinander für Wasserstoff, eine C₁-₁₈-Alkylgruppe, eine Gruppe -NR¹³R¹⁴, eine Gruppe -N⁺R¹³R¹⁴R¹⁵ oder eine Gruppe 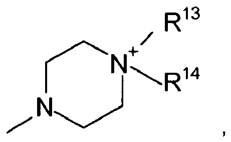 R¹² für Wasserstoff, -OH, oder eine C₁₋₁₈-Alkylgruppe, R¹³, R¹⁴ und R¹⁵ unabhängig voneinander für Wasserstoff, eine C₁₋₄-Alkyl- oder -Hydroxyalkylgruppe und X für Halogen stehen sowie A für ein ladungsausgleichendes Anion steht, das je nach seiner Ladung und der Art und Anzahl der sonstigen Laungen, insbesondere der Ladung des Mangan-Zentralatoms, auch fehlen oder mehrfach vorhanden sein kann.

## Claims

1. A method for producing spherical polyelectrolyte brushes (SPBs), which contain the bleach-activating transition metal complex compound in colloidally bound form, wherein a bleach-activating transition metal complex compound is brought in contact with a spherical polyelectrolyte brush (SPB) in the presence of water.

2. The method according to Claim 1, wherein the molar ratio between the molar number of functional groups in the polyelectrolyte shell to the added transitional metal complex compound is in the range of 100:1 to 2:1, in particular in the range of 10:1 to 4:1.

3. The method for producing spherical polyelectrolyte brushes (SPBs), which contain a bleach-activating transition metal complex compound in colloidally bound form, wherein one or more ligands capable of forming a bleach-potentiating transition metal complex in situ with a transition metal and the corresponding transition metal in salt form or in the form of a non-bleach-active complex are brought in contact with a spherical polyelectrolyte brush (SPB) in the presence of water.

4. A spherical polyelectrolyte brush (SPB), which contains the bleach-activating transition metal complex compound in colloidally bound form.

5. A method for bleaching treatment of cellulosic material, in particular in the production of cellulose or paper or in washing textiles in the presence of a bleaching agent which contains peroxygen and of a bleach-potentiating transition metal complex, wherein it is performed in the presence of spherical polyelectrolyte brushes (SPBs).

6. The method according to Claim 5, wherein it is performed at temperatures in the range of 10°C to 95°C, in particular in the range of 20°C to 40°C.

7. The method according to Claim 5 or 6, wherein it is performed at a pH in the range of pH 5 to pH 12, in particular from pH 8 to pH 11.

8. A textile washing method according to any one of Claims 5 to 7, wherein the peroxygen concentration (calculated as H₂O₂) in the wash liquor is in the range of 0.001 g/L to 10 g/L, in particular 0.1 g/L to 1 g/L.

9. The method according to any one of Claims 5 to 8, wherein one does not use the finished bleach-potentiating transition metal complex but instead uses separately one or more ligands, which are capable of forming a bleach-potentiating transition metal complex in situ with a transition metal in the process, and the transition metal is also added separately in the form of a salt or a non-bleach-potentiating complex or it is introduced into the process as a component of the process water used or is introduced via the cellulosic material to be treated.

10. Use of spherical polyelectrolyte brushes (SPBs) to reduce damage to cellulosic material due to the presence of bleach-potentiating transition metal complexes in the bleaching treatment of cellulosic material.

11. The use of spherical polyelectrolyte brushes (SPBs) to improve the bleaching performance of bleach-potentiating transition metal complexes in aqueous solutions which contain bleaching agent containing peroxygen.

12. A detergent which is gentle to textiles and contains a bleaching agent, which in turn contains peroxygen, bleach-potentiating transition metal complex or one or more ligands capable of forming a bleach-potentiating transition metal complex in situ with a transition metal in the washing process, and spherical polyelectrolyte brushes (SPBs), in particular SPBs containing the bleach-potentiating transition metal complex in colloidally bound form.

13. A method, use and/or agent according to any one of Claims 1 to 12, wherein the bleach-potentiating transition metal complex compound is a metal complex of formula (I)
**[LₙMₘXₚ]² Y_{q}** (I)
wherein M denotes manganese or iron or mixtures of these metals, which may be present in oxidation states II, III, IV or V or in mixtures of same, n and m, independently of one another, denote integers with a value from 1 to 4, X is a coordinating or bridging species, p is an integer with a value of 0 to 12, Y is a counterion, the type of which depends on the charge z of the complex, which may be positive, zero or negative, q = z/[charge Y] and L is a ligand, which is a macrocyclic organic molecule of the general formula 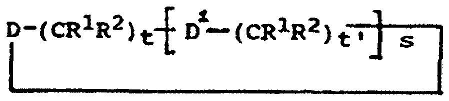 wherein each of the radicals R¹ and R² is zero, H, alkyl or aryl, optionally substituted; t and t', independently of one another, are 2 or 3; D and D¹, independently of one another, are N, NR, PR, O or S, wherein R is H, alkyl or aryl optionally substituted; and s is an integer with a value of 2 to 5, wherein if D = N, one of the heterocarbon bonds bonded to it is unsaturated, which leads to creation of an N = CR¹ fragment.

14. The method, use and/or agent according to Claim 13, wherein the complex corresponds to the formula (I), where M = manganese and L = 1,4,7-triazacyclononane, 1,4,7-trimethyl-1,4,7-triazacyclononane, 1,5,9-trimethyl-1,5,9-triazacyclododecane or 1,2,4,7-tetramethyl-1,4,7-triazacyclononane.

15. The method, use and/or agent according to any one of Claims 1 to 12, wherein the bleach-potentiating transition metal complex compound is a manganese complex of formula (II) 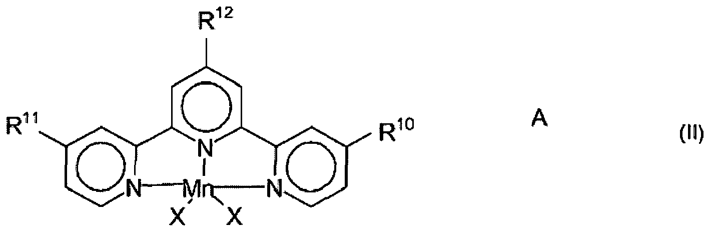 wherein R¹⁰ and R¹¹, independently of one another, stand for hydrogen, a C₁₋₁₈ alkyl group, an NR¹³R¹⁴ group, an N⁺R¹³R¹⁴R¹⁵ group or a 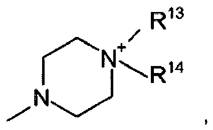 group, wherein R¹² stands for hydrogen, OH or a C₁₋₁₈ alkyl group, R¹³ , R¹⁴ and R¹⁵ independently of one another stand for hydrogen, a C₁₋₄ alkyl or hydroxyalkyl group and X stands for halogen and A stands for a charge-equalizing anion, which may also be omitted or may be present multiple times, depending on its charge and the type and number of other charges, in particular the charge of the manganese central atom.

## Revendications

1. Procédé pour la production de brosses polyélectrolytes sphériques (SPB) qui contiennent à l'état lié par voie colloïdale un composé de complexe de métal de transition activateur du blanchiment, dans lequel on met un composé de complexe de métal de transition activateur du blanchiment, en présence d'eau, en contact avec une brosse polyélectrolyte sphérique (SPB).

2. Procédé selon la revendication 1, **caractérisé en ce que** le rapport molaire entre le nombre de moles de groupes fonctionnels dans l'enveloppe de polyélectrolyte et celui du composé de complexe de métal de transition ajouté se situe dans la plage de 100 : 1 à 2 : 1, en particulier dans la plage de 10 : 1 à 4 : 1.

3. Procédé pour la production de brosses polyélectrolytes sphériques (SPB) qui contiennent à l'état lié par voie colloïdale un composé de complexe de métal de transition activateur du blanchiment, dans lequel on met un ou plusieurs ligands qui peuvent former in situ avec un métal de transition un complexe de métal de transition renforçateur du blanchiment et le métal de transition correspondant sous la forme d'un sel ou sous la forme d'un complexe exempt d'activité de blanchiment, en présence d'eau, en contact avec une brosse polyélectrolyte sphérique (SPB).

4. Brosse polyélectrolyte sphérique (SPB) qui contient, à l'état lié par voie colloïdale, le composé de complexe de métal de transition activateur du blanchiment.

5. Procédé pour le traitement de blanchiment d'une matière cellulosique, en particulier lors de la fabrication de pâte à papier ou de papier ou lors du lavage de textiles, en présence d'un agent de blanchiment peroxygéné et d'un complexe de métal de transition renforçateur du blanchiment, **caractérisé en ce qu'**on le met en oeuvre en présence de brosses polyélectrolytes sphériques (SPB).

6. Procédé selon la revendication 5, **caractérisé en ce qu'**on le met en oeuvre à des températures dans la plage de 10 °C à 95 °C, en particulier dans la plage de 20 °C à 40 °C.

7. Procédé selon la revendication 5 ou 6, **caractérisé en ce qu'**on le met en oeuvre à des valeurs de pH dans la plage d'un pH 5 à un pH 12, en particulier d'un pH 8 à un pH 11.

8. Procédé de lavage des textiles selon l'une quelconque des revendications 5 à 7, **caractérisé en ce que** les concentrations du composé peroxygéné (calculé comme H₂O₂) dans le bain de lavage se situent dans la plage de 0,001 g/l à 10 g/l, en particulier de 0,1 g/l à 1 g/l.

9. Procédé selon l'une quelconque des revendications 5 à 8, **caractérisé en ce qu'**on met en oeuvre, non pas le complexe de métal de transition renforçateur du blanchiment à l'état prêt à l'emploi, mais de manière séparée un ou plusieurs ligands qui, au cours du processus peuvent former avec un métal de transition, in situ, un complexe de métal de transition renforçateur du blanchiment, et on ajoute de manière dosée le métal de transition également de manière séparée sous la forme d'un sel ou d'un complexe non renforçateur du blanchiment ou bien on l'incorpore dans le processus sous la forme d'un constituant de l'eau industrielle mise en oeuvre à cet effet ou via la matière cellulosique qui doit être traitée.

10. Utilisation de brosses polyélectrolytes sphériques (SPB) pour diminuer les dégradations d'une matière cellulosique par la présence de complexes de métaux de transition renforçateurs du blanchiment lors du traitement de blanchiment d'une matière cellulosique.

11. Utilisation de brosses polyélectrolytes sphériques (SPB) pour améliorer la puissance de blanchiment d'un complexe de métal de transition renforçateur du blanchiment dans des solutions aqueuses qui contiennent des agents de blanchiment peroxygénés.

12. Agent de lavage préservant les textiles, contenant un agent de blanchiment peroxygéné, un complexe de métal de transition renforçateur du blanchiment ou un ou plusieurs ligands qui peuvent former, dans le processus de lavage, avec un métal de transition, in situ, un complexe de métal de transition renforçateur du blanchiment, et des brosses polyélectrolytes sphériques (SPB), en particulier des SPB qui contiennent à l'état lié par voie colloïdale, le complexe de métal de transition renforçateur du blanchiment.

13. Procédé, utilisation, respectivement agent selon l'une quelconque des revendications 1 à 12, **caractérisé en ce que** le composé de complexe de métal de transition renforçateur du blanchiment représente un complexe métallique répondant à la formule (I) :
**[LₙMₘXₚ]^{z} Y_{q}** (I)
dans laquelle M représente le manganèse ou le fer ou des mélanges de ces métaux, qui peuvent être présents à l'état d'oxydation II, III, IV ou V, ou dans des mélanges de ces derniers, n et m représentent, indépendamment l'un de l'autre, des nombres entiers avec une valeur de 1 à 4, X représente une espèce coordonnante ou faisant pont, p représente un nombre entier avec une valeur de 0 à 12, Y représente un ion antagoniste dont le type dépend de la charge z du complexe, qui peut être positive, nulle ou négative, q = z/[charge de Y], et L représente un ligand qui représente une molécule organique macrocyclique répondant à la formule générale 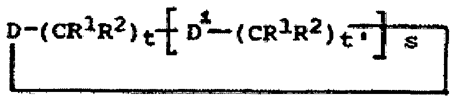 dans laquelle chacun des résidus R¹ et R² peut représenter zéro, un atome d'hydrogène, un groupe alkyle ou un groupe aryle, facultativement substitué ; t et t' sont égaux, indépendamment l'un de l'autre, à 2 ou 3 ; D et D¹ représentent, indépendamment l'un de l'autre, un atome d'azote, un groupe NR, un groupe PR, un atome d'oxygène ou un atome de soufre, R représentant un atome d'hydrogène, un groupe alkyle ou un groupe aryle, facultativement substitué ; et s représente un nombre entier avec une valeur de 2 à 5, dans lequel, au cas où D représente un atome d'azote, un des composés hétérocarbones qui y est lié est insaturé, ce qui donne lieu à la formation d'une fraction N = CR¹.

14. Procédé, utilisation, respectivement agent selon la revendication 13, **caractérisé en ce que** le complexe répond à la formule (I) dans laquelle M représente le manganèse et L représente le 1,4,7-triazacyclononane, le 1,4,7-triméthyl-1,4,7-triazacyclononane, le 1,5,9-triméthyl-1,5,9-triazacyclododécane ou le 1,2,4,7-tétraméthyl-1,4,7-triazacyclononane.

15. Procédé, utilisation, respectivement agent selon l'une quelconque des revendications 1 à 12, **caractérisé en ce que** le composé de complexe de métal de transition renforçateur du blanchiment représente un complexe de manganèse répondant à la formule (II) : 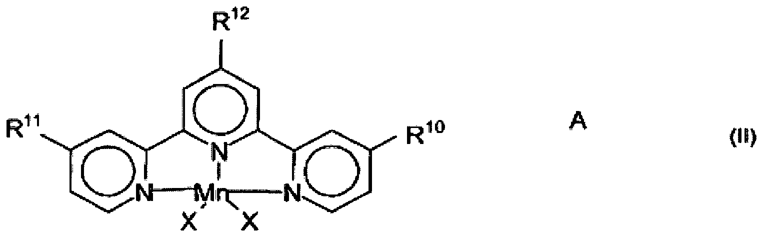 dans laquelle R¹⁰ et R¹¹ représentent, indépendamment l'un de l'autre, un atome d'hydrogène, un groupe alkyle en C₁-C₁₈, un groupe -NR¹³R¹⁴,
un groupe -N⁺R¹³R¹⁴R¹⁵ ou un groupe 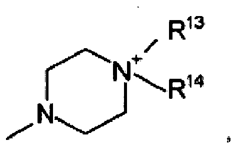 R¹² représente un atome d'hydrogène, un groupe -OH ou un groupe alkyle en C₁-C₁₈, R¹³ , R¹⁴ et R¹⁵ représentent, indépendamment l'un de l'autre, un atome d'hydrogène, un groupe alkyle ou hydroxyalkyle en C₁-C₄, et X représente un atome d'halogène, et A représente un anion de compensation de charge, qui, en fonction de sa charge ainsi que du type et du nombre des autres charges, en particulier de la charge de l'atome central du manganèse, peut également être absent ou être plusieurs fois présent.
